(19) Europäisches Patentamt

European Patent Office

Office européen des brevets

(11) **EP 1 486 476 B1**

(12) **EUROPEAN PATENT SPECIFICATION**

(45) Date of publication and mention
of the grant of the patent:
**09.11.2005 Bulletin 2005/45**

(51) Int Cl.⁷: **C04B 41/50**

(21) Application number: **03013513.1**

(22) Date of filing: **13.06.2003**

(54) **Uniformly coloured ceramic framework and colouring solution**

Gleichmässig gefärbte Gerüstkeramik sowie Färbelösung

Structure céramique de teinte homogene et une solution colorante pour céramiques

(84) Designated Contracting States:
**AT BE BG CH CY CZ DE DK EE ES FI FR GB GR HU IE IT LI LU MC NL PT RO SE SI SK TR**

(43) Date of publication of application:
**15.12.2004 Bulletin 2004/51**

(73) Proprietor: **3M ESPE AG**
**82229 Seefeld (DE)**

(72) Inventors:
• **Bissinger, Peter, Dr.**
**86911 Diessen (DE)**
• **Hauptmann, Holger**
**82404 Sindelsdorf (DE)**

(56) References cited:
**EP-A- 0 230 534          DE-A- 3 109 927**
**DE-A- 19 904 522        DE-C- 19 619 165**
**US-B1- 6 464 765**

• **DATABASE WPI Section Ch, Week 199510 Derwent Publications Ltd., London, GB; Class A97, AN 1995-070145 XP002256162 -& JP 06 345566 A (KAWAMURA KAGAKU KK), 20 December 1994 (1994-12-20)**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

**Description**

The present invention relates to a colouring solution for ceramic framework, the ceramic framework coloured with the solution as well as a process to obtain a uniformly coloured ceramic framework.

Ceramic framework is usually coloured with metal salt solutions. For that purpose salt solutions are applied on the ceramic or the framework itself is dipped into the solution. The framework is dried afterwards and fired to fix the colour.

In this respect DE 196 19 168 A1 describes a ceramic colouring solution consisting essentially of water and a palladium containing compound dissolved therein. The solution might further contain cosolvents such as alcohols, glycols, glycol ether or polyethylene glycol.

DE 196 19 165 C1 A1 refers to a similar solution containing a mixture of Ti and Fe components.

WO 00/46168 A1 refers to colouring ceramics by way of ionic or complex-containing solutions containing defined concentrations of at least one salts or complexes of the rare earth elements or of the elements of the subgroups. The solution might contain additives like stabilizers, complex builders, pigments and beating additives.

Disadvantageous in the processes described in the prior art is that forces occurring during the drying and/or firing process might cause migration of metal ions towards the surface in an inhomogeneous way thereby disturbing the aesthetics of the whole prosthodontic work.

One way to prevent migrations of that type might be the addition of soluble substances of high molecular weight. This usually affects the diffusion of all ingredients and thereby leads to the desired effect.

On the other hand such additives usually lead to a substantial increase in viscosity and may lead to an altered wetting behaviour by modification of the overall polarity of the system. Such effects result often in lower penetration of the solution into the pores of the ceramic and thereby increase the working time unduly.

Another drawback might be that polymeric additives may decrease the solubility of metal ions by binding great portions of the water available and also may decrease the shelf live stability of the solution by facilitating precipitation or being prone to degradation.

Any additive must also be thermally degradable during the firing process without leaving ay residue or affecting the composition and integrity of the ceramic framework.

Therefore, it is an object of the present invention to provide a colouring solution for ceramic framework having improved properties.

A further object is to provide a colouring solution for ceramic framework that prevents the disadvantageous separation tendencies, however, maintaining all other desired properties of the system.

Still a further object is to provide a colouring solution leading to less sintering deformation of ceramic framework after firing.

Still a further object is to provide a colouring solution leading to a uniformly coloured ceramic framework.

Surprisingly it has been found that providing a solution comprising

>    a) a solvent
>    b) a metal salt or metal complex, soluble in the solvent, wherein the amount of the metal ions in the solution is in the range of 0,01 to 7,0 % by weight,
>    c) polyethylene glycol having a Mn in the range of 10.000 to 50.000 in an amount of 2 to 8 % by weight of the total composition,
>    d) optionally a stabilizer,

wherein the metal salt is selected from rare earth elements and/or of the subgroups of the rare earth elements and/or salts of transition metals of the groups IIIA, IVA, VA, VIA, VIIA, VIIIA, IB, IIB addresses the problems mentioned above.

Therefore, the present invention relates to a solution for colouring ceramic framework, ceramic framework coloured with said solution and a process for colouring a ceramic framework.

The addition of polyethylene glycol or derivatives thereof surprisingly shows no detrimental effect on the viscosity and does not affect the shelf life stability of the solution.

On the contrary, surprisingly given due to stabilization of the additive against oxidative degradation the additive even sustained shelf life stability by preventing basic salts to precipitate.

A further positive and surprising effect using polyethylene oxides and derivatives thereof is the positive influence on the deformation occurring during the sintering process. Using the inventive colouring solution it is thus possible to improve the fit of wide spanning frameworks (more than 3 units).

Additionally there is no need for the dental technician to use pressure during the infiltration process as it is suggested in the current instruction manual of Lava™ Frame of 3M ESPE AG; edition 08/02.

The terms "comprise" and "contain" within the meaning of the invention introduce a non exhaustive list of features. Likewise, the word "one" is to be understood in the sense of "at least one".

The inventive solution can be applied to presintered ceramic bodies of various compositions, especially such comprising or preferably consisting essentially of $ZrO_2$ and/or $Al_2O_3$, respectively. These compositions are known to the skilled person in the art (cf. for example WO 00/4618 A1). The $ZrO_2$ is preferably stabilized with $Y_2O_3$.

Metal salts useful for the colouring purpose are described e.g. in WO 00/46168 A1 especially on page 3. Useful metal salts are selected from rare earth elements or of the subgroups of the rare earth elements like La, Pr and/ or Er. Useful are also salts of transition metals of the groups IIIA, IVA, VA, VIA, VIIA, VIIIA, IB, IIB, especially Fe, Co, Ni, Cu and Mn. A combination of Fe, Mn and Er is particularly preferred (cf. Table of Periodic Properties of the Elements; SARGENT-WELCH Scientific Company; Illinois 60077; 1980).

Generally all metal salts soluble in the solvent used can be used. Preferred are metal salts or metal complexes having as anions $Cl^-$, $Br^-$, $J^-$, $SO_4^{2-}$, $SO_3^{2-}$, $NO_2^-$, $NO_3^-$.

The above mentioned document (WO 00/46168 A1) is explicitly mentioned and its disclosure, especially the disclosure relating to metal salts disclosed in the above mentioned location, is regarded as being part of the disclosure of the present invention.

The metal ions are contained in the solution in an amount sufficient to achieve an adequate colouring of the ceramic framework.

Good results can be achieved with amounts of metal ions the range of 0,01 to 7,0 % by weight, preferably in the range of 0,1 to 7,0 % by weight.

Polyethylene oxide or derivatives of polyethylene oxide in the meaning of the present invention are generally prepolymeric polyethers predominantly comprising $-(CH_2-CH_2-O)-$ groups.

The polyethylene glycol should be dissolvable or dispersible in the solvent containing appropriate amounts of metal ions as mentioned above.

There is a great variety of such substances available on the market starting from simple polyethylene glycols to end group modified polyethylene oxides, di- tri- and multi block copolymers with other prepolymers, preferably polypropylene oxides and poly-THF, end group modified species and ethoxylated backbones of any type using mono-, di- and polyhydroxy compounds as starting materials for the polymerisation of the ethylene oxide.

The polyethylene oxide used can preferably represented by formula (1)

$$R^1O-(CH_2-CH_2-O)_m-R^1 \tag{1}$$

with $R^1$ = H, Acyl, Alkyl, Aryl, Alkylaryl, Polypropylglycol, Poly-THF, preferably H, Acetyl, Methyl, Ethyl, Propyl, Butyl, Hexyl, Octyl, Nonyl, Decyl, Lauryl, Tridecyl, Myristyl, Palmityl, Stearyl, Oleyl, Allyl, Phenyl, p-Alkylphenyl, Polypropyleneglycol, Poly-THF and
m = 20 to 5000, preferably 200 to 2000, more preferably 400 to 1000 or formula (2)

$$R^2-[(OCH_2-CH_2)_n-OR^1]_p \tag{2}$$

with $R^2$ = any organic residue with p anchor points for ethoxylation and 3 to 30 carbon atoms or a prepolymer of propylene oxide or tetrahydrofurane, preferably glyceryl (p = 3), TMP (trimethylolpropane-triyl, p = 3), TME (trimethylolethane-triyl, p = 3), pentaerythritol-tetrayl (p = 4), dipentaerythritol-hexayl (p = 6), BPA (Bisphenol-A-diyl, p = 2), polypropylene glycol-diyl (p = 2) and polytetramethylene glycol-diyl (p=2),
m = n * p = 20 to 5.000, preferably 200 to 2.000, more preferably 400 to 1.000 and p = 2 to 10, preferably 2 to 6.
P and n a are restricted to values such that the average content of ethylene oxide in the substance exceeds or is equal to 50 % according to the following formula (3):

$$\% \text{ ethylene oxide} = m * 44.05 * 100/ Mn \text{ (substance) (3)}$$

Mn (substance) is the average molecular weight of the respective polyether oxide or ethoxylated compound used.

While simple polyethylene glycols show the highest water solubility, segmented derivatives may add tensidic characteristics, if desired.

Besides polyethylene also mixtures of polyethylene and the derivatives can be used. Preferred examples for the polyethylene oxides mentioned above are:

Poly-(ethylenglykol)-block-poly-(propylenglykol)-block-poly-(ethylenglykol) (Aldrich Art.-No.: 54,234-2) Mn = 14.600, 82,5 % ethylene glycol,

Polyethylenglykol (VWR Art. No.: 817008) M = 10.000, Hydroxyl number: 9-12,
Polyethylenglycol (VWR Art No.: 818892) M = 35.000, Hydroxyl number: 3-4,
Glycerin-ethoxylat (Aldrich Art.-No.: 40,186-4) Mn = 1.000,
Pentaerythrit ethoxyylat (15/4 EO/OH) (Aldrich Art.-No.: 41,873-0) Mn = 797,
1,1,1-Trishydroxymethyl-propan-ethoxylat (20/3 EO/OH) (Aldrich Art.-No.: 41,617-7) Mn = 1.104,
Polyethylenglycoldimethylether (Aldrich Art.-No.: 44,590-8) Mn = ca. 2.000 Melting range: 52 - 55 °C,
Bisphenol A-ethoxylat (15 EO/Phenol) (Aldrich Art. No.: 41,661-4) Mn =ca. 1.500),
Brij® 700 (Aldrich Art. No.: 46-638-7) Mn = ca. 4.670).

The inventive colouring solution also comprises a solvent. The solvent should be able to dissolve the metal ion(s) used. Typical solvents are water, alcohols like methyl alcohol, ethyl alcohol, iso-propyl alcohol, n-propyl alcohol, ketones like aceton and mixtures of water with alcohols and/or ketones and/or ethylene glycol and/or glycerol.

The number average molecular weight (Mn) of the polyethylene oxide is in the range of 10.000 to 50.000. If the Mn is in the range of about 500 or below, the content of the polyethylene glycol used has to be increased.

If the Mn is above 200.000, the polyethylene glycol used is not sufficiently soluble in the solution and a homogeneous mixture is difficult to obtain.

The number average molecular weight (Mn) can be determined according to procedures known to a person skilled in the art as described for example in Arndt/Müller, Polymercharakterisierung, Hanse Verlag, 1996. Depending on the molecular weight to be determined, it might be necessary to apply different measurement methods (see below).

Generally, the polyethylene oxide should be added in an amount so that the desired effect can be obtained and the ceramic framework obtained after firing is uniformly coloured.

The polyethylene oxide is added in an amount in the range of 2 to 8 % by weight of the colouring solution.

If the amount is outside the above mentioned ranges, the colouring effect achieved is not sufficient especially regarding intensity.

Good results are especially achieved with a polyethylene oxide having a Mn in the range of about 10.000 and 50.000, added in an amount of 4 to 8 % by weight.

The solution used should have an adequate viscosity so that sufficient wetting of and penetration into the pores of the ceramic framework can be achieved. Good results can be obtained with a solution having a viscosity comparable to an aqueous polyethylene glycol solution (6 % by weight of polyethylene glycol 35.000; Mn = 14.000 to 19.000) at 23°C. Polyethylene glycol 35.000 is available from Merck Schuchardt OHG, D-85662 Hohenbrunn.

If the viscosity of the solution is to high, the colour value is to bright.

If the viscosity of the solution is to low, the colour value is not homogenous.

Further additives might be added to the colouring solution like stabilizers such as methoxy phenol hydrochinone, Topanol A, ascorbic acid, complex builders such as EDTA, NTA, citric acid, lactic acid and beating additives such as temporary binders, buffers such as acetate or amino buffers and thixotropic substances like polysaccharides, poly vinyl alcohols, cellulose derivatives, carraghenanes, polyvinyl pyrollidone.

The present invention is also directed to a process comprising the steps:

- providing a ceramic framework
- providing a solution as described above
- treating the ceramic framework with the solution as described in b)
- optionally drying the treated ceramic framework
- firing the treated ceramic framework

Colouring the ceramic framework is usually achieved by dipping the framework into the solution. However, the solution can also be applied to the framework by spraying, brushing or by using a sponge or fabric.

The ceramic framework usually is treated with the solution for about 1 to 5 minutes, preferably 2 to 3 minutes at room temperature.

Preferably no pressure is used.

Drying the coloured ceramic framework is not absolute necessary, but preferred to reduce the time needed for firing and to avoid unwanted inhomogenous colour effects.

The firing conditions are dependant on the ceramic material used.

The firing usually takes place for a $ZrO_2$ based ceramic at a temperature above 1300 °C, preferably above 1400 °C, more preferably above 1450 °C and lasts for at least 0,5 h, preferably for at least 1 h, more preferably for at least 2 h.

The firing usually takes place for a $Al_2O_3$ based ceramic at a temperature above 1350 °C, preferably above 1450 °C, more preferably above 1650 °C and lasts for at least 0,5 h, preferably for at least 1 h, more preferably for at least 2 h.

The present invention relates also to ceramic framework coloured with the inventive solution, and to ceramic framework obtainable by a process as described above.

The coloring solution of the present invention does not necessarily comprise any organic colorants or coloring means that will only tint the surface but not the bulk, like pigments.

The invention is hereinafter described by examples.

To determine the value of Mn for polyethylene glycol having a number average molecular weight in the range of 1.000 to 40.000 the following method can be used:

As an apparatus a Titroprozessor (TIP) is used with a Pt-titrode and a high Ohm reference electrode; chemical agents to be used are: 2 N KOH/methanol; 2,5 ml acetic anhydrid solved in 50,0 ml DMF; 2,5g 4-Dimethylaminopyridin solved in 100 ml DMF (catalytic solvent); THF, $H_2O$. All substances should be water free (< 0,01 % water).

A specific amount of the substance to be analyzed is put in a vessel and solved in 20 ml THF, if necessary by warming up. After addition of 10,0 ml catalytic solvent and 5,0 ml acetic anhydride reagent the mixture is stirred in the sealed vessel for 30 min at RT. Thereafter 2,0 ml $H_2O$ is added and the mixture is stirred for another 10 min at RT. The titration is done with 0,2 N KOH/methanol. Three blank values are determined to be used to determine the average value.

The calculation is done as follows:

$$\text{OH-equivalent} = \frac{\text{IW [mg]}}{(\text{BW [ml] - V [ml]}) * \text{F [mol/l]}}$$

$$\text{OH-number} = \frac{(\text{BW [ml] - V [ml]}) * \text{F [mol/l]} * \text{M [g/mol]}}{\text{IW [g]}}$$

with

    IW = initital weight
    BW = blank value
    V = volume
    F = concentration of standardized titrant
    M = 56,11 [g/mol]
    Mn = 56100/OH-number
    Mn = OH-equivalent * number of the OH groups in the molecule

For polyethylene glycol having a number average molecular weight in the range of 10.000 to 200.000 size exclusion chromatography (SEC) can be used.

The polymer is dissolved in tetrahydrofuran as mobile phase(THF, p.a., stabilized with BHT) and then analyzed by SEC with a differential refractometer detector. Molecular weight characterization is achieved by regression analysis of external polyethylene glycol (PEG) standards (8 SEC standards, 420 to 108.000 g/mol, e.g. from Fluka).

The analysis is done with a liquid chromatograph being able to deliver a constant longterm flow of 1.0 ml/min equipped with a differential refractometer (refractive index detector) and an electronic integrator, together with a column SDV, 8.0 mm x 30 cm with particle size of 5 microns, columns with 10.000 Å, 500 Å and 100 Å; from PSS, Mainz, Germany, and a pre-column SDV, 8.0 x 50 mm with particle size of 10 microns,1 00 Å; from PSS, Mainz, Germany. The flow rate should be 1.0 ml/min.

WinGPC, Size Exclusion Chromatography software from PSS, Mainz, Germany can be used to analyze the data obtained.

The average retention times for all the PEG standards is calculated, as well as the $\log_{10}$ MW for all the PEG standards. A PEG Molecular Weight (MW) calibration curve is constructed and the average retention times are plotted vs. $\log_{10}$ MW for the PEG standards to obtain a third order polynomial fit. The correlation coefficient (R2) should be > 0.99. The molecular weight of the PEG sample using the SEC software is calculated. Values for Peak MW (MP), Weight Average MW (MW), Number Average MW (MN), and Polydispersity (DP) can be obtained.

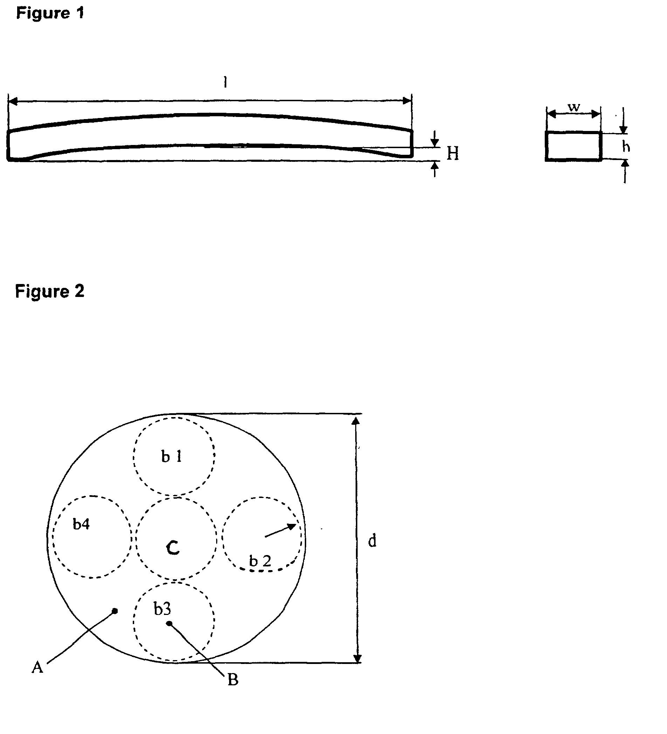

Figure 1 shows a typical test bar used for evaluating the deformation of the coloured ceramic framework after firing. Figure 2 shows a typical ceramic disc (Zirconia) used for evaluating the results of the homogeneity of the colouring process.

Abbreviations:

h      height; 2,3 mm

w      width; 3,1 mm

l      length; 37,0 mm

H      indicates sintering deformation

A      specimen/disc, thickness of disc; 1,5 mm

B      measured areas

r      radius; 3,0 mm

d      sample diameter; 15,0 mm

c      centre

b 1      border 1

b 2      border 2

b 3      border 3

b 4      border 4

L      brightness (100 = white, 0 = black)

$a^*$      red-green axis

$b^*$      yellow-blue axis

The tests for evaluating the deformation of the coloured ceramic framework were performed as follows:

The rod-shaped samples (dimensions h * w * l: 3 * 4 * 48 [mm]; before sintering) are processed similar to a Lava™ bridge (milling, dyeing and sintering) with a commercial Lava™ equipment:
The presintered Zirconia (a Lava™ Frame blank for bridges) are milled, thereafter the dust is removed with microbrushes and compressed air. The milled sample is dipped in one of the Lava™ frame shade dying liquids (F5, F5*) for two minutes. After that any excessively adhering dyeing liquid is removed with an absorbent paper. Each sample is placed on two Lava™ sintering supports (20 mm distance) for posterior bridges (curved platinum wire). The proportion between sample length and distance between the wires is like the sintering of a bridge. The firing was done in a Lava™ Therm furnace with the standard sintering program.

After sintering the deformation of the samples, indicated with H, was measured with a profile projector.
The frame shade solutions used are nominated as FS 5 (solution not containing polyethylene glycol) and FS 5* (solution containing polyethylene glycol).
The solution FS 5 comprised 1,9 % by weight metal ions, 1,5 % by weight organic binder. The solution FS 5* further comprised 6 % by weight of PEG (Mn = 35.000).

Table 1

| Frame Shade | | FS 5 | FS 5* | FS 5* | FS 5* | uncoloured |
|---|---|---|---|---|---|---|
| Drying time Furnace, r. t. | | 3,5 h Y | 3,5 h Y | 3 h air | No | n. a. |
| | | H [mm] | H [mm] | H [mm] | H [mm] | H [mm] |
| Sample No | 1 | 0,258 | 0,056 | 0,034 | 0,143 | 0,033 |
| | 2 | 0,192 | 0,054 | 0,026 | 0,145 | 0,034 |
| | 3 | 0,179 | 0,052 | 0,032 | 0,156 | 0,048 |
| | 4 | 0,152 | 0,072 | 0,014 | 0,122 | 0,039 |
| | 5 | 0,192 | 0,070 | 0,034 | 0,075 | 0,036 |
| Average [mm] | | 0,200 | 0,061 | 0,028 | 0,128 | 0,038 |
| St.dev. [mm] | | 0,033 | 0,009 | 0,008 | 0,032 | 0,006 |

It becomes clear from table 1 above that using a colouring solution containing polyethylene glycol instead of a colouring solution not containing polyethylene glycol the deformation of the tinted test bars measured after firing is reduced.

Homogeneity of tinted Zirconia discs

The homogeneity was determined using a commercially available Hunter Lab System and measured according to DIN 5033 Farbmessung Teil 1-8 (Normvalenz-System, L*a*b*-Farbraum nach CIE, 1976); DIN 6174 Farbmetrische Bestimmung von Farbabständen bei Körperfarben nach der CIE-LAB-Formel; DIN 55981 (ISO 787-25) Farbabstandsbestimmung $\Delta E^*$ using standard operating procedures according to the manufacturer's operation manual (Hunter Lab., Coorp.) to determine the sample dimension, the calibration and measure procedure.

Further hints to this measuring system can also be found in DE 100 52 203 A1 on page 3, line 56 to page 4, line 6.

The frame shade solutions used are nominated as FS 4 and 6 (solution not containing polyethylene glycol) and FS 4* and 6* (solution containing polyethylene glycol).

The solution FS 4 comprised 5,0 % by weight metal ions, 1,5 % by weight organic binder. The solution FS 4* comprise in addition 6,0 % by weight PEG 35.000 (Mn = 14.000 to 19.000).

The solution FS 6 comprise 1,4 % by weight metal ions, 1,5 % by weight organic binder. The solution FS 6* comprised in addition 6,0 % by weight PEG 35.000 (Mn = 14.000 to 19.000).

Table 2

| Bottom Side | | | | |
|---|---|---|---|---|
| FS 4 | L* | a* | b* | Opac. |
| centre | 68,65 | 2,80 | 24,52 | 92,52 |
| border 1 | 69,20 | 2,53 | 24,27 | 92,63 |
| border 2 | 68,76 | 2,71 | 24,69 | 92,29 |
| border 3 | 68,87 | 2,78 | 24,89 | 92,44 |
| border 4 | 68,98 | 2,71 | 24,82 | 92,43 |
| Diff. min/max | 0,55 | 0,27 | 0,62 | 0,34 |
| average | 68,89 | 2,71 | 24,64 | 92,46 |
| St. dev. (%) | 0,212 | 0,106 | 0,249 | 0,125 |

Table 3

| | Upper Side | | | |
|---|---|---|---|---|
| FS 4 | L* | a* | b* | Opac. |
| centre | 67,71 | 3,77 | 27,11 | 91,99 |
| border 1 | 67,29 | 4,07 | 28,65 | 91,81 |
| border 2 | 67,62 | 3,73 | 27,31 | 91,75 |
| border 3 | 67,84 | 3,69 | 27,20 | 91,91 |
| border 4 | 67,97 | 3,66 | 27,24 | 91,92 |
| Diff. min/max | 0,68 | 0,41 | 1,54 | 0,24 |
| average | 67,69 | 3,78 | 27,50 | 91,88 |
| St. dev. (%) | 0,258 | 0,165 | 0,646 | 0,095 |
| Diff. upper/ bottom side | 1,21 | -1,08 | -2,86 | 0,59 |

Table 4

| | Bottom Side | | | |
|---|---|---|---|---|
| FS 4* | L* | a* | b* | Opac. |
| centre | 67,87 | 3,41 | 26,55 | 92,87 |
| border 1 | 67,92 | 3,43 | 26,75 | 92,74 |
| border 2 | 67,92 | 3,35 | 26,56 | 92,60 |
| border 3 | 67,82 | 3,45 | 26,96 | 92,62 |
| border 4 | 67,87 | 3,47 | 26,96 | 92,72 |
| Diff. min/max | 0,10 | 0,12 | 0,41 | 0,27 |
| average | 67,88 | 3,42 | 26,76 | 92,71 |
| St.dev.(%) | 0,042 | 0,046 | 0,203 | 0,108 |

| | Upper Side | | | |
|---|---|---|---|---|
| FS 4* | L* | a* | b* | Opac. |
| centre | 67,17 | 4,13 | 26,42 | 92,53 |
| border 1 | 67,32 | 4,09 | 26,62 | 92,48 |
| border 2 | 67,34 | 4,06 | 26,33 | 92,34 |
| border 3 | 67,52 | 3,97 | 26,12 | 92,39 |
| border 4 | 67,46 | 4,01 | 26,38 | 92,63 |
| Diff.min/max | 0,35 | 0,16 | 0,50 | 0,29 |
| average | 67,36 | 4,05 | 26,37 | 92,47 |
| St. dev. (%) | 0,136 | 0,063 | 0,180 | 0,115 |
| Diff. upper/ bottom side | 0,52 | -0,63 | 0,38 | 0,24 |

Table 5

| Bottom Side | | | | |
|---|---|---|---|---|
| FS 6 | L* | a* | b* | Opaz. |
| centre | 67,99 | 0,11 | 22,10 | 93,98 |
| border 1 | 68,41 | -0,13 | 21,32 | 94,12 |
| border 2 | 68,43 | -0,14 | 21,41 | 93,94 |
| border 3 | 67,96 | 0,20 | 22,64 | 93,79 |
| border 4 | 68,15 | 0,12 | 22,37 | 93,96 |
| | | | | |
| Diff. min/max | 0,47 | 0,34 | 1,32 | 0,33 |
| Average | 68,19 | 0,03 | 21,97 | 93,96 |
| St. dev. (%) | 0,224 | 0,156 | 0,583 | 0,118 |

Table 6

| | Upper Side | | | |
|---|---|---|---|---|
| FS 6 | L* | a* | b* | Opaz. |
| center | 67,31 | 0,38 | 23,61 | 93,65 |
| border 1 | 66,64 | 0,71 | 25,01 | 93,13 |
| border 2 | 67,00 | 0,52 | 24,47 | 93,02 |
| border 3 | 68,01 | 0,09 | 22,56 | 93,50 |
| border 4 | 67,63 | 0,28 | 23,22 | 93,59 |
| | | | | |
| Diff. min/max | 1,37 | 0,62 | 2,45 | 0,63 |
| average | 67,32 | 0,40 | 23,77 | 93,38 |
| St. dev. (%) | 0,533 | 0,235 | 0,977 | 0,284 |
| | | | | |
| Diff. upper/ bottom side | 0,87 | -0,36 | -1,81 | 0,58 |

Table 7

| Bottom Side | | | | |
|---|---|---|---|---|
| FS 6* | L* | a* | b* | Opaz. |
| centre | 67,19 | 0,14 | 21,15 | 94,34 |
| border 1 | 67,21 | 0,10 | 21,36 | 94,22 |
| border 2 | 67,34 | 0,06 | 20,92 | 94,24 |
| border 3 | 67,32 | 0,09 | 21,04 | 94,17 |
| border 4 | 67,26 | 0,10 | 21,03 | 94,14 |
| | | | | |
| Diff. min/max | 0,15 | 0,08 | 0,44 | 0,20 |
| Average | 67,26 | 0,10 | 21,10 | 94,22 |

Table 7 (continued)

| Bottom Side | | | | |
|---|---|---|---|---|
| FS 6* | L* | a* | b* | Opaz. |
| Std.dev. (%) | 0,066 | 0,029 | 0,167 | 0,077 |

Table 8

| | Upper Side | | | |
|---|---|---|---|---|
| FS 6* | L* | a* | b* | Opaz. |
| Center | 67,03 | 0,22 | 20,34 | 94,13 |
| border 1 | 67,13 | 0,18 | 20,07 | 94,19 |
| border 2 | 67,17 | 0,17 | 20,29 | 94,02 |
| border 3 | 67,32 | 0,11 | 20,01 | 94,11 |
| border 4 | 67,08 | 0,17 | 20,39 | 94,01 |
| | | | | |
| Diff.min/max | 0,29 | 0,11 | 0,38 | 0,18 |
| Average | 67,15 | 0,17 | 20,22 | 94.09 |
| St.dev.(%) | 0,111 | 0,039 | 0,169 | 0,076 |
| | | | | |
| Diff.upper/ bottom side | 0,12 | -0,07 | 0,88 | 0,13 |

From the above tables 2 to 8 it becomes clear that using a colouring solution containing polyethylene glycol instead of a colouring solution not containing polyethylene glycol the homogeneity of the tinted discs is improved.

**Claims**

1. Solution for colouring ceramic framework, comprising:

   a) a solvent

   b) a metal salt or metal complex, soluble in the solvent, wherein the amount of the metal ions in the solution is in the range of 0,01 to 7,0 % by weight,

   c) polyethylene glycol having a Mn in the range of 10.000 to 50.000 in an amount of 2 to 8 % by weight of the total composition,

   d) optionally a stabilizer,

   wherein the metal salt is selected from rare earth elements and/or of the subgroups of the rare earth elements and/or salts of transition metals of the groups IIIA, IVA, VA, VIA, VIIA, VIIIA, IB, IIB.

2. Solution according to claim 1, wherein the solution has a viscosity comparable to an aqueous polyethylene glycol solution (6 % by weight of polyethylene glycol 35.000 (Mn = 14.000 to 19.000) at 23°C.

3. Solution according to anyone of the preceding claims, wherein the solvent comprises water, methyl alcohol, ethyl alcohol, iso-propyl alcohol, n-propyl alcohol, acetone, glycol, glycerol alone or in admixture.

4. Solution according to anyone of the preceding claims, wherein the anion of the metal salt or metal complex is selected from $Cl^-$, $Br^-$, $J^-$, $SO_4^{2-}$, $SO_3^{2-}$, $NO_2^-$, $NO_3^-$.

**5.** Solution according to anyone of the preceding claims, wherein the metal salt or metal complex contains elements selected from La, Pr, Er, Fe, Co, Ni, Cu or Mn.

**6.** Solution according to anyone of the preceding claims, comprising additives selected from stabilizers, complex builders, beating additives, buffers or thixotropic substances.

**7.** Process for obtaining a coloured ceramic framework, comprising the steps

> a) providing a ceramic framework
> b) providing a solution as described in anyone of the preceding claims.
> c) treating the ceramic framework with the solution of b)
> d) optionally drying the treated ceramic framework
> e) firing the treated ceramic framework.

**8.** Process according to claim 7, wherein the ceramic framework is treated with the solution for about 1 to 5 minutes at room temperature.

**9.** Process according to claim 7 or 8, wherein the firing takes place for a $ZrO_2$ based ceramic at a temperature above 1300 °C and lasts for at least 0,5 h and for a $Al_2O_3$ based ceramic at a temperature above 1350 °C and lasts for at least 0,5 h.

**10.** Process according to anyone of claims 7 to 9, wherein the firing takes place at a temperature above 1300 °C.

**11.** Process according to anyone of claims 7 to 10, wherein colouring the ceramic framework is achieved by dipping the framework into the solution or applying the solution to the framework is achieved by spraying, brushing or by using a sponge or fabric.

**12.** Ceramic framework, treated with a solution as described in anyone of claims 1 to 6.

**13.** Ceramic framework according to claim 12, wherein the ceramic is presintered and adsorbent.

**14.** Ceramic framework, obtainable from a process as described in anyone of claims 7 to 11.

**15.** Ceramic framework according to anyone of claims 12 to 14 comprising $ZrO_2$ or $Al_2O_3$.

**16.** Use of a solution as described in anyone of the claims 1 to 6 for treating a ceramic framework.

**17.** Use of a solution as described in anyone of the claims 1 to 6 for reducing the sintering deformation of ceramic framework during firing.

**18.** Use according to claims 16 or 17, wherein the ceramic framework is selected from presintered bodies comprising $ZrO_2$ and/or $Al_2O_3$.

**Patentansprüche**

**1.** Lösung zum Einfärben von Gerüstkeramik, umfassend:

> a) ein Lösungsmittel

> b) ein Metallsalz oder einen Metallkomplex, der in dem Lösungsmittel löslich ist, wobei die Menge an Metallionen in der Lösung im Bereich von 0,01 bis 7,0 Gew.-% liegt,

> c) Polyethylenglycol mit einem Molekulargewicht im Bereich von 10.000 bis 50.000 in einer Menge von 2 bis 8 Gew.-%, bezogen auf die gesamte Zusammensetzung,

> d) fakultativ ein Stabilisierungsmittel,

wobei das Metallsalz ausgewählt ist aus den Seltenerden-Elementen und/oder den Nebengruppen der Seltenerden-Elemente und/oder den Salzen der Übergangsmetalle der Gruppen IIIA, IVA, VA, VIA, VIIA, VIIIA, IB, IIB.

2. Lösung nach Anspruch 1, wobei die Lösung eine Viskosität aufweist, die mit der einer wässrigen Polyethylenglycollösung (6 Gew.-% Polyethylenglycol) 35.000 (Mn = 14.000 bis 19.000) bei 23 °C vergleichbar ist.

3. Lösung nach einem der vorstehenden Ansprüche, wobei das Lösungsmittel Wasser, Methylalkohol, Ethylalkohol, Isopropylalkohol, n-Propylalkohol, Aceton, Glycol, Glycerol alleine oder in Mischung umfasst.

4. Lösung nach einem der vorstehenden Ansprüche, wobei das Anion des Metallsalzes oder Metallkomplexes ausgewählt ist aus $Cl^-$, $Br^-$, $J^-$, $SO_4^{2-}$, $SO_3^{2-}$, $NO_2^-$, $NO_3^-$.

5. Lösung nach einem der vorstehenden Ansprüche, wobei das Metallsalz oder der Metallkomplex Elemente, ausgewählt aus La, Pr, Er, Fe, Co, Ni, Cu oder Mn, enthält.

6. Lösung nach einem der vorstehenden Ansprüche, umfassend Zusätze, ausgewählt aus Stabilisierungsmitteln, Komplexbildnern, Mahlhilfsmitteln, Puffern oder thixotropen Stoffen.

7. Verfahren zum Erhalt einer gefärbten Gerüstkeramik, umfassend die Schritte

    a) Bereitstellen einer Gerüstkeramik

    b) Bereitstellen einer Lösung, wie in einem der vorstehenden Ansprüche beschrieben.

    c) Behandeln der Gerüstkeramik mit der unter b) beschriebenen Lösung

    d) wahlweise Trocknen der behandelten Gerüstkeramik

    e) Brennen der behandelten Gerüstkeramik

8. Verfahren nach Anspruch 7, wobei die Gerüstkeramik etwa 1 bis 5 Minuten lang bei Raumtemperatur mit der Lösung behandelt wird.

9. Verfahren nach Anspruch 7 oder 8, wobei das Brennen bei einer Keramik auf $ZrO_2$-Basis bei einer Temperatur von mehr als 1300 °C stattfindet und wenigstens 0,5 h dauert und bei einer Keramik auf $Al_2O_3$-Basis bei einer Temperatur von mehr als 1350 °C stattfindet und wenigstens 0,5 h dauert.

10. Verfahren nach einem der Ansprüche 7 bis 9, wobei das Brennen bei einer Temperatur von mehr als 1300 °C stattfindet.

11. Verfahren nach einem der Ansprüche 7 bis 10, wobei das Einfärben der Gerüstkeramik durch Eintauchen des Gerüsts in die Lösung oder Auftragen der Lösung auf das Gerüst durch Sprühen, Pinseln oder unter Verwendung eines Schwammes oder Tuches erfolgt.

12. Gerüstkeramik, die mit einer Lösung wie in einem der Ansprüche 1 bis 6 beschrieben behandelt ist.

13. Gerüstkeramik nach Anspruch 12, wobei die Keramik vorgesintert und adsorbierend ist.

14. Gerüstkeramik, die mittels eines Verfahrens wie in einem der Ansprüche 7 bis 11 beschrieben erhalten wird.

15. Gerüstkeramik nach einem der Ansprüche 12 bis 14, umfassend $ZrO_2$ oder $Al_2O_3$.

16. Verwendung einer Lösung wie in einem der Ansprüche 1 bis 6 beschrieben zur Behandlung einer Gerüstkeramik.

17. Verwendung einer Lösung wie in einem der Ansprüche 1 bis 6 beschrieben zur Herabsetzung der Sinterverformung einer Gerüstkeramik beim Brennen.

18. Verwendung nach Anspruch 16 oder 17, wobei die Gerüstkeramik ausgewählt ist aus vorgesinterten Körpern,

umfassend $ZrO_2$ oder $Al_2O_3$.

**Revendications**

1. Solution pour la coloration de structures céramiques, comprenant :

   a) un solvant

   b) un sel métallique ou un complexe métallique, soluble dans le solvant, dans laquelle la quantité des ions métalliques dans la solution représente entre 0,01 et 7,0 % en poids,

   c) un polyéthylène glycol ayant une valeur Mn entre 10 000 et 50 000 dans une quantité représentant entre 2 et 8 % en poids de la composition totale,

   d) éventuellement un stabilisateur,

   dans laquelle le sel métallique est sélectionné parmi les éléments des terres rares et/ou les sous-groupes des éléments des terres rares et/ou des sels de métaux transitoires des groupes IIIA, IVA, VA, VIA, VIIA, VIIIA, IB, IIB.

2. Solution selon la revendication 1, dans laquelle la solution a une viscosité comparable à une solution aqueuse de polyéthylène glycol (6 % en poids de polyéthylène glycol 35 000) (Mn = 14 000 à 19 000) à 23 °C.

3. Solution selon l'une quelconque des revendications précédentes, dans laquelle le solvant comprend l'eau, l'alcool méthylique, l'alcool éthylique, l'alcool isopropylique, l'alcool n-propylique, l'acétone, le glycol, le glycérol, seuls ou en mélange additionnel.

4. Solution selon l'une quelconque des revendications précédentes, dans laquelle l'anion du sel métallique ou du complexe métallique est sélectionné parmi $Cl^-$, $Br^-$, $J^-$, $SO_4^{2-}$, $SO_3^{2-}$, $NO_2^-$, $NO_3^-$.

5. Solution selon l'une quelconque des revendications précédentes, dans laquelle le sel métallique ou le complexe métallique contient des éléments sélectionnés parmi La, Pr, Er, Fe, Co, Ni, Cu ou Mn.

6. Solution selon l'une quelconque des revendications précédentes, comprenant des additifs sélectionnés parmi les stabilisateurs, les complexants, les additifs de raffinage, les tampons ou les substances thixotropes.

7. Procédé d'obtention d'une structure céramique colorée, comprenant les étapes consistant à :

   a) fournir une structure céramique

   b) fournir une solution selon l'une quelconque des revendications précédentes

   c) traiter la structure céramique avec la solution de b)

   d) éventuellement, sécher la structure céramique traitée

   e) cuire la structure céramique traitée.

8. Procédé selon la revendication 7, dans lequel la structure céramique est traitée avec la solution pendant environ 1 à 5 minutes à température ambiante.

9. Procédé selon la revendication 7 ou 8, dans lequel la cuisson a lieu, pour une céramique à base de $ZrO_2$, à une température supérieure à 1 300 °C et dure au moins 0,5 h, et pour une céramique à base de $Al_2O_3$, à une température supérieure à 1 350 °C et dure au moins 0,5 h.

10. Procédé selon l'une quelconque des revendications 7 à 9, dans lequel la cuisson a lieu à une température supérieure à 1 300 °C.

11. Procédé selon l'une quelconque des revendications 7 à 10, dans lequel la coloration de la structure céramique est obtenue par trempage de la structure dans la solution ou l'application de la solution sur la structure est obtenue par pulvérisation, par application au pinceau ou par utilisation d'une éponge ou d'un chiffon.

12. Structure céramique, traitée avec une solution selon l'une quelconque des revendications 1 à 6.

13. Structure céramique selon la revendication 12, dans laquelle la céramique est préfrittée et adsorbante.

14. Structure céramique, pouvant être obtenue par un procédé selon l'une quelconque des revendications 7 à 11.

15. Structure céramique selon l'une quelconque des revendications 12 à 14 comprenant $ZrO_2$ ou $Al_2O_3$.

16. Utilisation d'une solution selon l'une quelconque des revendications 1 à 6 pour traiter une structure céramique.

17. Utilisation d'une solution selon l'une quelconque des revendications 1 à 6 pour réduire la déformation au frittage de structures céramiques pendant la cuisson.

18. Utilisation selon les revendications 16 ou 17, dans laquelle la structure céramique est sélectionnée parmi des corps préfrittés comprenant $ZrO_2$ et/ou $Al_2O_3$.

**Figure 1**

**Figure 2**